# FASCICULE DE BREVET EUROPEEN

(11) **EP 3 131 956 B1**
(45) Date de publication et mention de la délivrance du brevet: **22.05.2019**
(21) Numéro de dépôt: 15725738.7
(22) Date de dépôt: 15.04.2015
(51) Int. Cl.: C08J 5/04, C08L 77/06, C08G 69/26

(54) **COMPOSITION ET PROCEDE POUR MATERIAU COMPOSITE AVEC IMPREGNATION PAR COMPOSITION REACTIVE D'UN PREPOLYMERE POLYAMIDE ET D'UN ALLONGEUR DE CHAINE DIEPOXYDE**
ZUSAMMENSETZUNG UND VERFAHREN FÜR EINEN MIT EINER REAKTIVEN ZUSAMMENSETZUNG EINES POLYAMIDPOLYMERS IMPRÄGNIERTEN VERBUNDWERKSTOFF UND DIEPOXIDKETTENVERLÄNGERER
COMPOSITION AND METHOD FOR COMPOSITE MATERIAL IMPREGNATED WITH REACTIVE COMPOSITION OF A POLYAMIDE POLYMER AND A DIEPOXIDE CHAIN EXTENDER

(30) Priorité: 15.04.2014 FR 1453353
(43) Date de publication de la demande: 22.02.2017
(73) Titulaire: Arkema France, 92700 Colombes (FR)
(72) Inventeur: HOCHSTETTER, Gilles, 94240 L'Hay les Roses (FR); BRIFFAUD, Thierry, 27300 Bernay (FR); CAPELOT, Mathieu, 27300 Bernay (FR)
(86) Numéro de dépôt international: PCT/FR2015/051021
(87) Numéro de publication internationale: WO 2015/159022

(56) Documents cités:
- EP-A1- 0 261 020
- EP-A1- 0 550 314
- EP-A1- 1 266 930
- EP-A1- 1 988 113
- WO-A1-2013/178955
- WO-A2-2011/003973
- FR-A1- 2 958 296
- US-A1- 2011 306 718
- US-A1- 2013 338 260
- US-A1- 2013 338 261
- DOLDEN ET AL: "Structure-property relationships in amorphous polyamides", POLYMER, ELSEVIER SCIENCE PUBLISHERS B.V, GB, vol. 17, no. 10, 1 octobre 1976 (1976-10-01), pages 875-892, XP024121175, ISSN: 0032-3861, DOI: 10.1016/0032-3861(76)90254-8 [extrait le 1976-10-01]

## Description

L'invention concerne une composition de moulage réactive, en particulier pour un matériau composite thermoplastique avec une matrice thermoplastique en polyamide (PA) semi-cristallin de température de transition vitreuse Tg d'au moins 80°C, de préférence d'au moins 90°C et de température de fusion Tf inférieure ou égale à 280°C et couvre également un procédé de fabrication dudit matériau composite, en particulier des pièces mécaniques ou de structure à base dudit matériau, l'utilisation de la composition de l'invention pour des pièces de matériau composite ainsi que la pièce composite qui en résulte et pour des applications dans les domaines de : l'automobile, du ferroviaire, marin, du transport routier, de l'éolien, du sport, de l'aéronautique et du spatial, du bâtiment, des panneaux et des loisirs.

EP 0261 020 décrit l'utilisation de prépolymères semi-cristallins réactifs à base de PA 6, 11 et 12 pour la fabrication d'un composite thermoplastique par un procédé de pultrusion. Les prépolymères de structure aliphatique tels que décrits présentent des Tg faibles et des performances mécaniques insuffisantes à chaud.

EP 550 314 décrit parmi ses exemples des compositions (non réactives) de copolyamide en cherchant des températures de fusion élevées et des Tg limitées avec la plupart des exemples cités ayant une Tg trop basse (< 80°C) ou une Tf trop élevée (> 300°C).

EP 1 988 113 décrit une composition de moulage à base d'un copolyamide 10T/6T avec :
- 40 à 95% mol de 10T
- 5 à 40% de 6T.

Sont visés en particulier des polyamides de température de fusion élevée et supérieure à 270°C. Les exemples mentionnés et la figure 1 nous enseignent que la température de fusion de ces compositions est d'au moins 280°C.

WO 2011/003973 décrit des compositions comprenant de 50 à 95 mol% d'un motif à base d'une diamine aliphatique linéaire comportant de 9 à 12 atomes de carbone et d'acide téréphtalique et de 5 à 50% de motif associant l'acide téréphtalique à un mélange de 2,2,4 et 2,4,4 triméthylhexanediamine.

US 2011306718 décrit un procédé de pultrusion de polyamides aliphatiques réactives de faible Tg associés à des allongeurs de chaînes de structure polymérique portant plusieurs (et bien supérieur à 2) fonctions d'anhydrides ou d'époxydes. Ce document ne décrit aucun allongeur non polymérique.

Les inconvénients de l'état de l'art avec l'absence d'un bon compromis entre les performances mécaniques et l'aptitude de mise en oeuvre (facilité de transformation) à plus basse température avec un temps de cycle de production plus court sont surmontés par la solution de la présente invention qui vise des compositions de moulage réactives pour un PA semi-cristallin permettant une mise en oeuvre plus facile à des températures plus basses avec une économie sur le bilan global énergétique du procédé de mise en oeuvre, un temps de cycle de production plus court et une productivité améliorée par une aptitude à la cristallisation rapide dudit polymère polyamide et tout en maintenant à un niveau élevé les performances mécaniques desdits matériaux finaux. Plus particulièrement, dans le cas de ces compositions réactives, on cherche à avoir une cinétique de réaction plus rapide tout en ayant une vitesse et/ou une température de cristallisation du polymère formé également plus élevée.

Le choix d'un polymère polyamide semi-cristallin, comme matrice du matériau composite de l'invention, a comme intérêt par rapport aux polyamides amorphes, des performances mécaniques significativement améliorées notamment à chaud, telles que la résistance au fluage ou à la fatigue. En outre, présenter un point de fusion au-delà de 200°C a pour avantage dans l'automobile d'être compatible avec les traitements par cataphorèse, ce que ne permet pas une structure de type PA amorphe. Comme pour les amorphes, on recherche une Tg supérieure ou égale à 80°C et de préférence supérieure ou égale à 90°C, plus préférentiellement supérieure à 100°C, pour assurer de bonnes propriétés mécaniques au composite sur toute la plage de température d'utilisation par exemple jusqu'à 80°C et de préférence jusqu'à 90°C pour l'éolien, jusqu'à 100°C pour l'automobile et jusqu'à 120°C pour l'aéronautique. Par contre, un point de fusion trop élevé, en particulier supérieur à 280°C, est en revanche néfaste car il nécessite la mise en oeuvre du composite à des températures plus élevées avec des contraintes de matériel de moulage à utiliser et de système de chauffe associé et une surconsommation énergétique avec en plus des risques de dégradation thermique par chauffage à des températures plus élevées que la température de fusion dudit polyamide, avec comme conséquence l'affectation des propriétés de la matrice thermoplastique finale et du composite qui en résulte. La cristallinité dudit polymère, c'est-à-dire du polymère final de matrice, doit être la plus élevée possible mais avec une température de fusion Tf pas trop élevée, c'est-à-dire Tf ≤ 280°C et plus particulièrement Tf ≤ 270°C permettant des performances mécaniques optimales et une vitesse de cristallisation et/ou la température de cristallisation la plus élevée possible avec réduction du temps de moulage avant éjection de la pièce composite moulée et avec un choix sélectif de la composition dudit polyamide semi-cristallin. Donc, l'objet de la présente invention est la mise en oeuvre de nouvelles compositions spécifiques de composite thermoplastique, en particulier à base de polyamide semi-cristallin, présentant un bon compromis entre des performances mécaniques élevées ou tenue mécanique, en particulier à chaud et une mise en oeuvre facile. L'objectif est des compositions faciles à mettre en oeuvre avec des températures de transformation et de mise en oeuvre plus basses que celles pour d'autres compositions de l'état de la technique, avec un bilan énergétique global de mise en oeuvre plus favorable, un temps de cycle plus court et une productivité plus élevée. Plus particulièrement, la solution de l'invention, dans le cas de ces compositions réactives, permet en utilisant des compositions à base de prépolymères polyamides réactifs semi-cristallins, à la fois une cinétique de réaction et une cinétique de cristallisation rapide avec un temps de cycle plus court. En particulier, la matrice polymère polyamide tout en ayant une Tg élevée et une Tf limitée comme définies ci-haut, avec une mise en oeuvre facile dudit composite, doit avoir également une vitesse de cristallisation élevée, caractérisée d'abord par un écart entre température de fusion et de cristallisation Tf-Tc ne dépassant pas 50°C, de préférence ne dépassant pas 40°C et plus particulièrement ne dépassant pas 30°C. Plus préférentiellement, cet écart Tf-Tc ne dépasse pas 30°C, sauf si Tf-Tg est < 150°C, auquel cas, si Tf-Tg < 150°C, l'écart Tf-Tc peut varier jusqu'à 50°C. Les performances mécaniques ou tenue mécanique à chaud du composite peuvent être évaluées par la variation du module mécanique entre la température ambiante, c'est-à-dire 23°C et 100°C avec un maintien d'au moins à 75% des performances mécaniques, en termes de module, par rapport à celles à l'ambiante (23°C). Donc, l'objet de l'invention est de mettre au point une composition de moulage réactive à base de polyamide répondant à ces besoins.

Donc, le premier objet de l'invention concerne une composition de moulage réactive spécifique, en particulier pour matériau composite thermoplastique, laquelle composition comprend une composition réactive spécifique précurseur d'un polymère thermoplastique semi-cristallin qui est un polyamide (PA) semi-cristallin et en option, ladite composition de moulage comprend au moins un renfort fibreux et dans ce cas de préférence à base de fibres longues, ladite composition réactive précurseur comprenant au moins un prépolymère polyamide réactif entre et au moins un allongeur de chaîne par polyaddition qui porte des fonctions époxy réactives avec les fonctions dudit prépolymère polyamide. Ladite composition spécifique est basée sur le choix sélectif d'au moins deux motifs d'amide A et B différents et à des proportions molaires spécifiques avec présence optionnelle d'au moins un troisième (C) et éventuellement d'un quatrième (D) motif amide, ces motifs étant différents les uns par rapport aux autres.

Un deuxième objet de l'invention concerne un procédé spécifique de fabrication dudit matériau composite thermoplastique et plus particulièrement de fabrication de pièces mécaniques ou des pièces de structure à base dudit matériau composite.

L'invention concerne également la composition réactive spécifique précurseur du PA semi-cristallin de l'invention et son utilisation pour la fabrication d'un matériau composite thermoplastique et plus particulièrement de pièces mécaniques ou de structure à base de ce matériau.

L'invention concerne également les pièces ou articles et le matériau composite thermoplastique qui résulte de ladite composition de moulage ou de la composition précurseur.

Le premier objet de l'invention concerne donc une composition de moulage réactive, en particulier pour matériau composite thermoplastique, laquelle composition comprend une composition réactive précurseur d'un polymère thermoplastique semi-cristallin qui est un polyamide semi-cristallin et en option au moins un renfort fibreux et dans ce cas (présence de renfort fibreux) de préférence à base de fibres longues et avec :
- ladite composition réactive précurseur dudit polymère thermoplastique polyamide comprenant :
   a) au moins un prépolymère polyamide thermoplastique, porteur de n fonctions réactives terminales X identiques, choisies parmi : -NH₂ ou -CO₂H, de préférence -CO2H, avec n étant de 1 à 3, de préférence de 1 à 2, plus préférentiellement 1 ou 2, plus particulièrement 2 et
   b) au moins un allongeur de chaîne Y-A'-Y, avec A' étant une liaison simple liant les 2 fonctions Y ou un biradical hydrocarboné de structure non polymérique et porteur de 2 fonctions réactives terminales Y époxy, réactives par polyaddition avec au moins une fonction X dudit prépolymère a), de préférence ledit allongeur b) ayant une masse moléculaire inférieure à 500, plus préférentiellement inférieure à 400,
   et avec
- ledit polymère polyamide semi-cristallin issu de la réaction de polyaddition entre lesdits composants a) et b) de ladite composition précurseur ayant une température de transition vitreuse Tg d'au moins 80°C et de préférence d'au moins 90°C et une température de fusion Tf inférieure ou égale à 280°C,
   et avec
- ledit polymère polyamide et son prépolymère a) comprenant dans leur structure des motifs amides A et B différents et en option des motifs amides C et D, sélectionnés comme suit :
   - A : est un motif amide majoritaire présent à un taux molaire allant de 55 à 95%, de préférence de 55 à 85%, plus préférentiellement de 55 à 80%, choisi parmi les motifs x.T, où x est une diamine aliphatique linéaire en C₉ à C₁₈, de préférence en C₉, C₁₀, C₁₁ et C₁₂ et où T est l'acide téréphtalique,
   - B : est un motif amide différent de A, lequel motif B est présent à un taux molaire allant de 5 à 45%, de préférence de 15 à 45%, plus préférentiellement de 20 à 45%, en fonction de la Tf du polyamide à base de motif A et ledit motif amide B est choisi parmi les motifs x'.T où x' est choisi parmi :
      ∘ B1) une diamine aliphatique ramifiée portant une seule ramification (ou branchement) méthyle ou éthyle et ayant une longueur de chaîne principale différente d'au moins deux atomes de carbone par rapport à la longueur de chaîne principale de la diamine x dudit motif A associé, de préférence x' étant la 2-méthyl pentaméthylène diamine (MPMD) ou
      ∘ B2) la m-xylylène diamine (MXD) ou
      ∘ B3) une diamine aliphatique linéaire en C₄ à C₁₈ quand dans le motif A, ladite diamine x est une diamine aliphatique linéaire en C₁₁ à C₁₈ et x' est une diamine en C₉ à C₁₈ quand dans le motif A, ladite diamine x est une diamine en C₉ ou C₁₀,
      et de préférence B étant choisi parmi x'.T, où x' est la MPMD selon B1) ou la MXD selon B2) ou une diamine aliphatique linéaire comme définie ci-haut selon B3) et plus préférentiellement x' est la MPMD selon B1) ou MXD selon B2) et encore plus préférentiellement MXD selon B2),
   - C : motif amide optionnel différent de A et de B, choisi parmi les motifs amides à base d'une structure cycloaliphatique et/ou aromatique ou à base de x'T tel que défini ci-haut pour B mais avec x' différent de x' pour le motif B,
   - D : motif amide optionnel différent de A, de B et de C quand C est présent et choisi parmi les motifs amides aliphatiques issus de :
      ▪ aminoacides ou lactames en C₆ à C₁₂, de préférence en C₆, C₁₁ et C₁₂ ou leurs mélanges
      ▪ la réaction d'un diacide aliphatique linéaire en C₆ à C₁₈, de préférence en C₆ à C₁₂ et d'une diamine aliphatique linéaire en C₆ à C₁₈, de préférence en C₆ à C₁₂ ou de leurs mélanges
      et sous la condition que la somme des taux molaires de A + B + C + D soit égale à 100%.

La somme des taux molaires en l'absence de C et D se réduit à A + B = 100%, avec A et B étant complémentaires à 100%. Si C est présent sans D, dans ce cas cette somme se réduit à A + B + C = 100%. Si seul D est présent sans C, ladite somme de 100% correspond à A + B + D.

Ladite composition est plus particulièrement une composition pour matériau composite thermoplastique et dans ce cas elle comprend ledit renfort fibreux, de préférence à base de fibres longues. Composition « pour matériau composite thermoplastique » signifie que ladite composition permet l'obtention d'un matériau composite thermoplastique.

Selon une première possibilité dans ladite composition de moulage de l'invention, ledit polyamide prépolymère a) mais également le polymère polyamide issu par polyaddition dudit prépolymère a) avec ledit allongeur b) comprend ledit motif amide selon C, différent de A et de B où le motif C comme défini ci-haut est présent et en remplacement partiel de B et à un taux molaire allant jusqu'à 25%, de préférence jusqu'à 20%, plus préférentiellement jusqu'à 15% par rapport audit motif B.

Quand le motif C est présent et qu'il correspond à x'T avec x' comme défini ci-haut pour le motif B, dans ce cas C étant différent de B par définition, ledit motif C peut être à base de x' étant défini selon B1) et dans ce cas ledit motif B peut avoir x' défini selon soit B2) soit B3). Si C est à base de x' selon B2), dans ce cas le motif B peut être à base de x' étant selon B1) ou B3). Si C est à base de x' selon B3), dans ce cas le motif B peut être à base de x' étant défini selon B1) ou B2).

Plus particulièrement, dans ce motif C de ladite composition, ladite structure aromatique peut être choisie par exemple parmi la structure isophtalique et/ou naphtalènique. Une structure téréphtalique est possible en particulier pour le composant diacide quand la diamine est cycloaliphatique. Ladite structure cycloaliphatique peut être choisie parmi une structure à base de cycle cyclohexane ou une structure à base de cycle décahydronaphtalénique (structure naphtalénique hydrogénée).

De préférence, la structure de C est dérivée d'une diamine aliphatique et d'un diacide cycloaliphatique et/ou aromatique, par exemple comme définis ci-dessus ou d'un diacide et d'une diamine cycloaliphatique, par exemple comme définis ci-dessus. Plus particulièrement, ledit motif C est choisi parmi les motifs issus :
- d'une diamine cycloaliphatique et d'acide téréphtalique ou
- de diacide choisi parmi isophtalique, naphténique ou à base de cyclohexane et de diamine x ou x' comme définies ci-haut pour les motifs A et B respectivement.

Selon une autre variante de la composition de l'invention, ledit motif D est présent et en remplacement partiel de B à un taux molaire pouvant aller jusqu'à 70%, de préférence jusqu'à 15% par rapport audit motif B. Donc, selon cette variante, ladite composition comprend ledit motif D comme défini ci-haut, en particulier choisi parmi : les aminoacides ou lactames en C₆ à C₁₂, de préférence en C₆, C₁₁ et C₁₂ ou leurs mélanges ou les motifs issus de la réaction d'un diacide aliphatique linéaire en C₆ à C₁₈, de préférence C₆ à C₁₂ et d'une diamine aliphatique linéaire en C₆ à C₁₈, de préférence C₆ à C₁₂ et de préférence avec les motifs A et B étant respectivement à base des diamines x et x' comme définies ci-haut.

De préférence, le motif C et/ou D, quand il est présent, remplace partiellement le motif B avec un taux molaire (C + D) jusqu'à 70% et de préférence inférieur à 40% par rapport au taux molaire dudit motif B comme défini selon l'invention. Donc, une partie du motif B tel que défini selon l'invention qui représente moins de 50%, de préférence moins de 40% en mol par rapport à B, peut être remplacée par un motif C et/ou D comme définis ci-dessus selon l'invention.

Plus particulièrement, la différence Tf-Tc, entre la température de fusion Tf et la température de cristallisation Tc dudit polymère thermoplastique semi-cristallin, (polyamide), ne dépasse pas 50°C, de préférence ne dépasse pas 40°C et plus particulièrement ne dépasse pas 30°C.

En particulier, Tf-Tc ne dépasse pas 30°C sauf si Tf-Tg est inférieur à 150°C, auquel cas Tf-Tc peut aller jusqu'à 50°C.

Selon une option particulière, l'enthalpie de cristallisation dudit polymère de matrice, mesurée en Calorimétrie Différentielle à Balayage (DSC) selon la Norme ISO 11357-3, est supérieure à 40 J/g, de préférence supérieure à 45 J/g.

De préférence, ledit motif amide A, comme défini selon l'invention ci-haut et ci-après, est présent à un taux molaire allant de 55 à 80%, de préférence de 55 à 75%, plus préférentiellement de 55 à 70% par rapport à l'ensemble des motifs dudit polymère matrice (polyamide) tel que défini ci-haut selon l'invention.

Selon une première option préférée de la composition selon l'invention décrite ci-haut, ladite composition a un motif B qui correspond à x'T avec x' défini selon l'option B1) décrite ci-haut, en particulier avec comme diamine plus préférée pour ledit motif B, étant la MPMD. Le motif A reste comme défini ci-haut, c'est-à-dire x.T, avec x une diamine aliphatique linéaire en C₉ à C₁₈, de préférence en C₉, C₁₀, C₁₁ ou C₁₂.

Selon une deuxième option préférée de ladite composition, celle-ci a un motif B qui correspond à x'T où x' est la MXD (m-xylylène diamine) selon option B2) définie ci-haut. Le motif A reste comme défini pour la première option citée. Cette seconde option constitue ensemble avec la première citée ci-dessus les plus préférées de l'invention et en particulier cette seconde option est la plus préférée de l'invention.

Une troisième option préférée est celle où B est défini selon l'option B1) ou B2) ou B3) comme définie ci-haut et avec présence d'un motif C comme défini ci-haut en remplacement de B et jusqu'à 25%, de préférence jusqu'à 20%, plus préférentiellement jusqu'à 15% en moles et en particulier avec B étant défini selon l'option première ou seconde comme définie ci-haut.

Plus préférentiellement encore, ladite composition de polyamide est basée sur les motifs A et B sélectionnés comme suit :
- pour le motif A étant 9T, ledit motif B est sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%,
- pour le motif A étant 10T, ledit motif B est sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%,
- pour le motif A étant 11T, ledit motif B est sélectionné parmi : 9T, 10T, 12T, 13T, 14T, 15T, 16T, 17T et 18T, MPMD.T et MXD.T, de préférence 9T, 13T, 15T, 16T, 17T et 18T, MPMD.T et MXD.T, plus préférentiellement MPMD.T ou MXD.T, avec un taux molaire de B allant de 20 à 45%,
- pour le motif A étant 12T, ledit motif B est sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

Selon cette sélection, une première composition plus particulière de l'invention peut être définie, avec le motif A étant un motif 9T et le motif B étant sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%. Une deuxième composition particulière correspond à un motif A étant un motif 10T et le motif B étant sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%. Une troisième composition particulière correspond à un motif A étant un motif 11T et le motif B étant sélectionné parmi : 9T, 10T, 12T, 13T, 14T, 15T, 16T, 17T et 18T, MPMD.T et MXD.T, de préférence, 9T, 13T, 15T, 16T, 17T et 18T, MPMD.T et MXD.T, plus préférentiellement MPMD.T ou MXD.T, avec un taux molaire de B allant de 20 à 45%. Finalement, une autre composition particulière correspond à un motif A étant un motif 12T et le motif B étant sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

La masse moléculaire moyenne en nombre Mn dudit polymère (polyamide) final de la matrice thermoplastique dudit composite est de préférence dans une plage allant de 10000 à 40000, de préférence de 12000 à 30000. Ces valeurs Mn peuvent correspondre à des viscosités inhérentes supérieures ou égales à 0,8. Concernant la masse moléculaire moyenne en nombre Mn dudit prépolymère polyamide a), elle est d'au moins deux fois inférieure à celle du polymère final issu dudit prépolymère a), ledit polymère constituant la matrice thermoplastique d'un matériau composite thermoplastique dans le cas de présence d'un renfort fibreux.

Plus particulièrement, la Mn dudit prépolymère a) peut varier de 500 à 10000, de préférence de 1000 à 6000.

La structure semi-cristalline dudit polymère polyamide semi-cristallin est essentiellement apportée par la structure dudit prépolymère a) qui est également semi-cristallin.

Ledit allongeur b) peut être sélectionné parmi les diépoxydes aliphatiques, cycloaliphatiques ou aromatiques éventuellement substitués.

Comme exemples de diépoxydes aliphatiques, on peut citer des diglycidyl éthers de diols aliphatiques, comme diépoxydes aromatiques, des diglycidyl éthers de bisphénol A tel que le diglycidyl éther de bisphénol A (DGEBA) et comme diépoxydes cycloaliphatiques, des diglycidyl éthers de diols cycloaliphatiques ou du bisphénol A hydrogéné. De manière plus générale, comme exemples convenables de diépoxydes selon l'invention, on peut citer les bisphenol A diglycidyl éther (DGEBA) et son dérivé hydrogéné (cycloaliphatique), bisphénol F diglycidyl éther, le tétrabromo bisphénol A diglycidyl éther ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn < 500, polypropylène glycol diglycidyl éther de Mn < 500, polytétraméthylène glycol diglycidyl éther de Mn < 500, résorcinol diglycidyl éther, néopentylglycol diglycidyl éther, bisphenol A polyéthylène glycol diglycidyl éther de Mn < 500, bisphénol A polypropylèneglycol diglycidyl éther de Mn < 500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2 cyclohexane dicarboxylate et les mélanges des diépoxydes cités.

Avantageusement, lorsque les fonctions réactives terminales X identiques dudit prépolymère sont -CO2H, un catalyseur spécifique à la réaction d'estérification peut être utilisé.

De tels catalyseurs sont en général des catalyseurs acides ou basiques. De tels catalyseurs sont connus de l'homme du métier et peuvent, par exemple, être trouvés, dans « Epoxy Resins, Chemistry and Technology », seconde Ed., édité par C.A. May, Marcel Dekker, New York1988.

A titre d'exemple, on peut citer comme catalyseurs convenables les suivants :
- les imidazoles, tels que la 2-méthylimidazole ou la 1,2-diméthylimidazole
- les sels d'ammonium quaternaires, tels que ceux de tétraméthylammonium, en particulier l'acétate de tétraméthylammonium, chlorure de tétraméthylammonium, bromure de tétraméthylammonium ou ceux de tétrabutylammonium comme l'acétate de tétrabutylammonium, chlorure de tétrabutylammonium, bromure de tétrabutylammonium ou ceux de benzyltriéthylammonium comme l'acétate de benzyltriéthylammonium, chlorure de benzyltriéthylammonium, bromure de benzyltriéthylammonium,
- les phosphines, telles que la triphénylphosphine,
- les amines tertiaires, telles que la benzyldiméthylamine ou le 2,4,6-Tri(diméthylaminométhyl) phénol (sous le nom Ancamine® K54),
- les acides forts comme l'acide para-toluène sulfonique,
- les sels de métaux, tels que l'acétate de zinc, l'acétylacétonate de zinc ou l'acétylacétonate de zirconium.

La quantité de catalyseur utilisée dans les compositions de l'invention peut varier de 0,01 à 10% en moles totale d'époxy contenu dans l'allongeur de chaîne Y-A'-Y.

De préférence, le rapport entre groupements X acides et groupements Y époxy est de 0,9 à 1,0 et de préférence de 1,0.

Plus particulièrement, ladite composition de moulage réactive comprend en plus de ladite composition réactive précurseur au moins un renfort fibreux, de préférence à base de fibres longues, en particulier à section circulaire avec L/D > 1000, de préférence > 2000 et plus particulièrement sélectionnées parmi les fibres de verre, de carbone, de céramique, d'aramide ou leurs mélanges.

Le deuxième objet de l'invention concerne un procédé de fabrication d'un matériau composite thermoplastique, en particulier d'une pièce mécanique ou d'une pièce de structure à base d'au moins une composition telle que définie selon l'invention qui comprend une étape d'imprégnation à l'état fondu d'au moins un renfort fibreux par une composition réactive précurseur telle que définie ci-haut selon l'invention, dans un moule ouvert ou fermé ou hors moule.

Plus particulièrement, ledit procédé comprend les étapes suivantes :
i) imprégnation à l'état fondu d'un renfort fibreux par une composition réactive précurseur telle que définie ci-haut selon l'invention, dans un moule ouvert ou fermé ou hors moule, afin d'obtenir une composition de moulage avec renfort fibreux telle que définie ci-haut selon l'invention,
ii) chauffage de la composition de l'étape i) avec réaction de polymérisation par polyaddition en masse à l'état fondu, entre composants a) et b) de ladite composition réactive précurseur, avec allongement de chaîne,
iii) mise en oeuvre par moulage ou par un autre système de mise en oeuvre et simultanément avec l'étape ii) de polymérisation.

Selon une option, le procédé de l'invention comprend en simultané ou en différé une étape de mise en oeuvre comprenant moulage et mise en forme dudit renfort fibreux imprégné de l'étape i) pour former la pièce composite finale dans un moule.

Encore plus particulièrement dans ledit procédé, ladite mise en oeuvre est réalisée selon une technique RTM (Resin Transfer Molding), injection-compression, pultrusion ou par infusion.

Plus particulièrement lors de l'imprégnation à l'état fondu, la viscosité de ladite composition réactive précurseur reste à la température d'imprégnation inférieure à 100 Pa.s et de préférence < 50 Pa.s.

La viscosité à l'état fondu de ladite composition réactive précurseur ou du prépolymère a) ou du polymère est mesurée suivant le manuel de référence du constructeur de l'appareil de mesure utilisé, qui est un rhéomètre Physica MCR301, sous balayage d'azote à la température donnée sous cisaillement de 100 s⁻¹, entre deux plans parallèles de diamètre de 50 mm.

La Mn du prépolymère a) ou du polymère thermoplastique est déterminée à partir de la titration (dosage) des fonctions terminales X selon une méthode potentiométrique (dosage en retour d'un réactif en excès par rapport aux fonctions terminales OH et dosage direct pour NH₂ ou carboxy) et à partir de la fonctionnalité théorique n calc (vs X) calculée à partir du bilan matière et de la fonctionnalité des réactants (voir dans description le mode de calcul général).

La mesure de la viscosité intrinsèque ou inhérente est réalisée dans le m-crésol. La méthode est bien connue de l'homme du métier. On suit la norme ISO 937 mais en changeant le solvant (utilisation du m-crésol à la place de l'acide sulfurique et la température étant de 20°C).

La température de transition vitreuse Tg des polymères thermoplastiques utilisés est mesurée à l'aide d'un calorimètre différentiel à balayage (DSC), après un 2^{ème} passage en chauffe, suivant la norme ISO 11357-2. La vitesse de chauffage et de refroidissement est de 20°C/min.

La température de fusion Tf et la température de cristallisation Tc sont mesurées par DSC, après une 1^{ère} chauffe, selon ISO 11357-3. La vitesse de chauffage et de refroidissement est de 20°C/min.

L'enthalpie de cristallisation dudit polymère de matrice est mesurée en Calorimétrie Différentielle à Balayage (DSC) selon la norme ISO 11357-3.

L'invention couvre également ladite composition réactive précurseur telle que définie ci-haut, laquelle comprend lesdits composants réactifs prépolymère a) et allongeur b) comme définis ci-haut.

Ensuite, l'invention couvre l'utilisation de ladite composition précurseur telle que définie ci-avant (en absence de renfort fibreux) pour l'imprégnation à l'état fondu d'un renfort fibreux, comme précurseur de la matrice polymère thermoplastique, pour la fabrication de pièces mécaniques ou de structure à base de matériau composite. Plus particulièrement, lesdites pièces mécaniques ou de structure dudit matériau composite concernent des applications dans le domaine de l'automobile, ferroviaire, marin ou maritime, de l'éolien, photovoltaïque, solaire y compris panneaux solaires et composants de centrales solaires, du sport, aéronautique et spatial, transport routier concernant les camions, du bâtiment, génie civil, des panneaux et des loisirs, de l'électrique ou de l'électronique. Suivant l'utilisation finale desdites pièces, la Tg de la matrice polymère thermoplastique, polyamide semi-cristallin selon l'invention, peut être adaptée aux besoins. En particulier, quand l'utilisation concerne des applications dans le domaine de l'éolien, la Tg dudit polyamide est d'au moins 80°C et de préférence d'au moins 90°C. Quand elle concerne des applications dans le domaine de l'automobile, la Tg dudit polymère polyamide est d'au moins 100°C et quand elle concerne des applications dans le domaine de l'aéronautique, la Tg dudit polymère polyamide est d'au moins 120°C.

Finalement, l'invention concerne également une pièce moulée qui résulte de l'utilisation d'au moins une composition de moulage sans renfort fibreux ou d'une composition réactive précurseur comme définie ci-avant selon l'invention. Plus particulièrement, il s'agit de pièce en matériau composite obtenue à partir d'une composition comprenant en plus de ladite composition réactive précurseur au moins un renfort fibreux à base de fibres longues, en particulier à section circulaire avec L/D (longueur L sur diamètre D) > 1000, de préférence > 2000 et plus particulièrement sélectionnées parmi les fibres de verre, de carbone, de céramique, d'aramide ou leurs mélanges.

### EXEMPLES

### Méthodes de caractérisation

La viscosité à 280°C est mesurée suivant le manuel de référence du constructeur de l'appareil de mesure utilisé, qui est un rhéomètre Physica MCR301, sous balayage d'azote à la température donnée sous cisaillement de 100 s⁻¹, entre deux plans parallèles de diamètre de 50 mm.

La Mn du prépolymère est déterminée à partir de la titration (dosage) des fonctions terminales COOH selon une méthode potentiométrique et à partir d'une fonctionnalité théorique de 2.

La température de transition vitreuse Tg est mesurée à l'aide d'un calorimètre différentiel à balayage (DSC), après un 2^{ème} passage en chauffe, suivant la norme ISO 11357-2. La vitesse de chauffage et de refroidissement est de 20°C/min.

La température de fusion Tf et la température de cristallisation Tc sont mesurées par DSC, après une 1^{ère} chauffe, selon ISO 11357-3. La vitesse de chauffage et de refroidissement est de 20°C/min.

L'enthalpie de cristallisation est mesurée en Calorimétrie Différentielle à Balayage (DSC) selon la norme ISO 11357-3.

### A - Préparation du prépolymère réactif

Ce mode opératoire est représentatif de tous les types de polyamide de l'invention.

Dans un réacteur autoclave de 14 litres, on introduit 5 kg des matières premières suivantes :
- 500 g d'eau,
- les diamines,
- le ou les diacides,
- 35 g d'hypophosphite de sodium en solution,
- 0,1 g d'un antimousse WACKER AK1000 (société Wacker Silicones).

La nature et rapport molaire des motifs et structures moléculaires du polyamide prépolymère réactif sont donnés dans le tableau 1 ci-dessous.

Le réacteurfermé est purgé de son oxygène résiduel puis chauffé à une température de 230°C de la matière. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à minimum à Tf + 10°C à pression atmosphérique, soit environ 285°C.

Le prépolymère est ensuite vidangé par la vanne de fond puis refroidi dans un bac d'eau puis broyé.

Les caractéristiques du prépolymère sont présentées au tableau 1 suivant.

**Tableau 1 : Caractéristiques du prépolymère préparé**

| Structure moléculaire et composition molaire | Monomères utilisés | X | Tf (°C) | Tg (°C) | Tc (°C) | ΔH (J/g) | Viscosité 280°C (Pa.s) | Indice d'acide mEq/kg(*) | Mn potentiométrie g/mole |
|---|---|---|---|---|---|---|---|---|---|
| MXD.T/10.T (41,2/58,8) | - m-xylylène diamine -decane diamine - acide téréphtalique | -CO₂H | 270,3 | 119,4 | 240,8 | 50,1 | 4,51 | 920 | 2173 |

| | | | | | | | | | |
|---|---|---|---|---|---|---|---|---|---|
| (*) : Milliéquivalents par kilogramme | | | | | | | | | |

### B - Préparation du polymère polyamide par allongement de chaîne avec un allongeur Y-A'-Y avec Y = époxy

Le prépolymère décrit ci-dessus après séchage et broyage est mélangé avec une certaine quantité de diépoxyde. La quantité ou proportion de chaque produit est calculée de manière à ce que la stoechiométrie acide/époxy soit respectée (1/1) et que la masse totale soit égale à 12 g.

Le mélange est introduit sous balayage d'azote dans une micro-extrudeuse de marque DSM (de volume 15 mL) à vis coniques co-rotatives, préchauffée à 280°C, telle que définie dans l'invention, sous rotation des vis à 100 tr/min. Le mélange est laissé sous recirculation dans la micro-extrudeuse et l'augmentation de la viscosité est suivie par mesure de la force normale indiquée par l'appareil. Au bout de 10 minutes environ, un palier est atteint et le contenu de la micro-extrudeuse est vidangé sous forme d'un jonc. Le produit refroidi à l'air est mis sous forme de granulés.

**Tableau 2 : Exemples réalisés**

| Réf | Diépoxyde Y-A'-Y utilisé | Catalyseur utilisé | % molaire de catalyseur (mol catalyseur / mol -CO₂H) | Force normale finale mesurée (N) |
|---|---|---|---|---|
| E1 | DER332 (diglycidyl éther de bisphénol A) | Aucun | 0 | 4500 |
| E2 | DER332 (diglycidyl éther de bisphénol A) | 2-méthylimidazole | 5 | 4700 |
| E3 | Diglycidyl-1,2-cyclohexane dicarboxylate | Aucun | 0 | 2000 |

**Tableau 3 : Caractéristiques des exemples réalisés**

| Réf | Viscosité (Pa.s) | Tf (°C) | Tg (°C) | Tc (°C) | Tf-Tc (°C) | ΔH (J/g) |
|---|---|---|---|---|---|---|
| E1 | 5124 | 263,1 | 130,4 | 220,9 | 42,2 | 36,1 |
| E2 | 5419 | 268,1 | 131,9 | 226,2 | 41,9 | 42,2 |
| E3 | 1805 | 269,3 | 133,6 | 230,4 | 38,9 | 46,9 |

## Revendications

1. Composition de moulage réactive en particulier pour matériau composite thermoplastique, **caractérisée en ce qu'**elle comprend une composition réactive précurseur d'un polymère thermoplastique semi-cristallin qui est un polyamide semi-cristallin et en option au moins un renfort fibreux et dans ce cas de préférence à base de fibres longues et **en ce que** :
- ladite composition réactive précurseur dudit polymère thermoplastique polyamide comprend :
a) au moins un prépolymère polyamide thermoplastique, porteur de n fonctions réactives terminales X identiques, choisies parmi : -NH₂ ou -CO₂H, de préférence -CO2H, avec n étant de 1 à 3, de préférence de 1 à 2, plus préférentiellement 1 ou 2, plus particulièrement 2 et
b) au moins un allongeur de chaîne Y-A'-Y, avec A' étant une liaison simple liant les 2 fonctions Y ou un biradical hydrocarboné de structure non polymérique et porteur de 2 fonctions réactives terminales Y époxy, réactives par polyaddition avec au moins une fonction X dudit prépolymère a), de préférence ledit allongeur b) ayant une masse moléculaire inférieure à 500, plus préférentiellement inférieure à 400,
et **en ce que**
- ledit polymère polyamide semi-cristallin issu de la réaction de polyaddition entre lesdits composants a) et b) de ladite composition précurseur a une température de transition vitreuse Tg d'au moins 80°C, de préférence d'au moins 90°C et une température de fusion Tf inférieure ou égale à 280°C,
et **en ce que**
- ledit polymère polyamide et son prépolymère a) comprennent dans leur structure des motifs amides A et B différents et en option des motifs amides C et D, sélectionnés comme suit :
- A : est un motif amide majoritaire présent à un taux molaire allant de 55 à 95%, de préférence de 55 à 85%, plus préférentiellement de 55 à 80%, choisi parmi les motifs x.T, où x est une diamine aliphatique linéaire en C₉ à C₁₈, de préférence en C₉, C₁₀, C₁₁ et C₁₂ et où T est l'acide téréphtalique,
- B : est un motif amide différent de A, lequel motif B est présent à un taux molaire allant de 5 à 45%, de préférence de 15 à 45%, plus préférentiellement de 20 à 45%, en fonction de la Tf du polyamide à base de motif A et ledit motif amide B est choisi parmi les motifs x'.T où x' est choisi parmi :
∘ B1) une diamine aliphatique ramifiée portant une seule ramification (ou branchement) méthyle ou éthyle et ayant une longueur de chaîne principale différente d'au moins deux atomes de carbone par rapport à la longueur de chaîne principale de la diamine x dudit motif A associé, de préférence x' étant la 2-méthyl pentaméthylène diamine (MPMD) ou
∘ B2) la m-xylylène diamine (MXD) ou
∘ B3) une diamine aliphatique linéaire en C₄ à C₁₈ quand dans le motif A, ladite diamine x est une diamine aliphatique linéaire en C₁₁ à C₁₈ et x' est une diamine en C₉ à C₁₈ quand dans le motif A, ladite diamine x est une diamine en C₉ ou C₁₀,
et de préférence B étant choisi parmi x'.T, où x' est la MPMD selon B1) ou la MXD selon B2) ou une diamine aliphatique linéaire comme définie ci-haut selon B3) et plus préférentiellement x' est la MPMD selon B1) ou MXD selon B2) et encore plus préférentiellement MXD selon B2),
- C : motif amide optionnel différent de A et de B, choisi parmi les motifs amides à base d'une structure cycloaliphatique et/ou aromatique ou à base de x'T tel que défini ci-haut pour B mais avec x' différent de x' pour le motif B,
- D : motif amide optionnel différent de A, de B et de C quand C est présent et choisi parmi les motifs amides aliphatiques issus de :
▪ aminoacides ou lactames en C₆ à C₁₂, de préférence en C₆, C₁₁ et C₁₂ ou leurs mélanges
▪ la réaction d'un diacide aliphatique linéaire en C₆ à C₁₈, de préférence en C₆ à C₁₂ et d'une diamine aliphatique linéaire en C₆ à C₁₈, de préférence en C₆ à C₁₂ ou de leurs mélanges
et sous la condition que la somme des taux molaires de A + B + C + D soit égale à 100%.

2. Composition selon la revendication 1, **caractérisée en ce que** ledit motif amide C est présent et en remplacement partiel de B à un taux molaire allant jusqu'à 25% par rapport audit motif B.

3. Composition selon l'une des revendications 1 à 2, **caractérisé en ce que** ledit motif D est présent et en remplacement partiel de B à un taux molaire allant jusqu'à 70% par rapport audit motif B.

4. Composition selon l'une des revendications 1 à 3, **caractérisé en ce que** la différence Tf-Tc, entre la température de fusion Tf et la température de cristallisation Tc dudit polymère thermoplastique semi-cristallin, ne dépasse pas 50°C, de préférence ne dépasse pas 40°C et plus particulièrement ne dépasse pas 30°C.

5. Composition selon l'une des revendications 1 à 4, **caractérisée en ce que** l'enthalpie de cristallisation dudit polymère de matrice, mesurée en Calorimétrie Différentielle à Balayage (DSC) selon la Norme ISO 11357-3, est supérieure à 40 J/g, de préférence supérieure à 45 J/g.

6. Composition selon l'une des revendications 1 à 5, **caractérisée en ce que** ledit motif amide A est présent avec un taux molaire allant de 55 à 80%, de préférence de 55 à 75%, plus préférentiellement de 55 à 70% par rapport à l'ensemble des motifs dudit polymère.

7. Composition selon l'une des revendications 1 à 6, **caractérisée en ce que** ledit motif B correspond à x'T avec x' choisi selon l'option B1) en particulier avec la diamine x' étant MPMD.

8. Composition selon l'une des revendications 1 à 6, **caractérisée en ce que** ledit motif B correspond à x'T avec x' choisi selon option B2), x' étant la MXD.

9. Composition selon l'une des revendications 1 à 6, **caractérisée en ce que** ledit motif B correspond à x'T avec x' étant une diamine aliphatique linéaire telle que définie selon l'option B3).

10. Composition selon l'une des revendications 1 à 6, **caractérisée en ce que** les motifs A et B sont sélectionnés comme suit :
- pour le motif A étant 9T, ledit motif B est sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%
- pour le motif A étant 10T, ledit motif B est sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%
- pour le motif A étant 11T, ledit motif B est sélectionné parmi : 9T, 10T, 12T, 13T, 14T, 15T, 16T, 17T et 18T, MPMD.T et MXD.T, de préférence 9T, 13T, 15T, 16T, 17T et 18T, MPMD.T et MXD.T, plus préférentiellement MPMD.T ou MXD.T, avec un taux molaire de B allant de 20 à 45%
- pour le motif A étant 12T, ledit motif B est sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

11. Composition selon la revendication 10, **caractérisée en ce que** le motif A est un motif 9T et le motif B est sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%.

12. Composition selon la revendication 10, **caractérisée en ce que** le motif A est un motif 10T et le motif B est sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T, plus préférentiellement MPMD.T ou MXD.T et MXD.T avec un taux molaire de B allant de 25 à 45%.

13. Composition selon la revendication 10, **caractérisée en ce que** le motif A est un motif 11T et le motif B est sélectionné parmi : 9T, 10T, 12T, 13T, 14T, 15T, 16T, 17T et 18T, MPMD.T et MXD.T, de préférence 9T, 13T, 15T, 16T, 17T et 18T, MPMD.T et MXD.T, plus préférentiellement MPMD.T ou MXD.T, avec un taux molaire de B allant de 20 à 45%.

14. Composition selon la revendication 10, **caractérisée en ce que** le motif A est un motif 12T et le motif B est sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

15. Composition selon l'une des revendications 7 à 14, **caractérisée en ce que** le motif C et/ou D comme définis selon l'une des revendications 1 à 3 remplace en partie le motif B avec un taux molaire jusqu'à 70%, de préférence inférieur à 40% par rapport au taux molaire dudit motif B.

16. Composition selon l'une des revendications 1 à 15, **caractérisée en ce que** lesdits prépolymères réactifs a) ont une masse moléculaire moyenne en nombre Mn allant de 500 à 10000, de préférence de 1000 à 6000.

17. Composition selon l'une des revendications 1 à 16, **caractérisée en ce que** ledit allongeur est un diépoxyde aliphatique, cycloaliphatique ou aromatique éventuellement substitué.

18. Composition selon l'une des revendications 1 à 17, **caractérisée en ce qu'**elle comprend au moins un renfort fibreux de préférence avec des fibres longues, en particulier à section circulaire avec L/D > 1000, de préférence > 2000 et plus particulièrement sélectionnées parmi les fibres de verre, de carbone, de céramique, d'aramide ou leurs mélanges.

19. Procédé de fabrication d'un matériau composite thermoplastique, en particulier d'une pièce mécanique ou d'une pièce de structure à base d'au moins une composition telle que définie selon l'une des revendications 1 à 18, **caractérisé en ce qu'**il comprend une étape d'imprégnation à l'état fondu d'au moins un renfort fibreux par une composition réactive précurseur telle que définie selon l'une des revendications 1 à 17, dans un moule ouvert ou fermé ou hors moule.

20. Procédé selon la revendication 19, **caractérisé en ce qu'**il comprend les étapes suivantes :
i) imprégnation à l'état fondu d'un renfort fibreux par une composition réactive précurseur telle que définie dans l'une des revendications 1 à 17, dans un moule ouvert ou fermé ou hors moule, afin d'obtenir une composition de moulage avec renfort fibreux telle que définie selon l'une des revendications 1 à 18,
ii) chauffage de la composition de l'étape i) avec réaction de polymérisation par polyaddition en masse à l'état fondu, entre composants a) et b) de ladite composition réactive précurseur, avec allongement de chaîne,
iii) mise en oeuvre par moulage ou par un autre système de mise en oeuvre et simultanément avec l'étape ii) de polymérisation.

21. Procédé selon la revendication 20, **caractérisé en ce qu'**il comprend en simultané ou en différé une étape de mise en oeuvre comprenant moulage et mise en forme dudit renfort fibreux imprégné de l'étape i) pour former la pièce composite finale dans un moule.

22. Procédé selon la revendication 21, **caractérisé en ce que** ladite mise en oeuvre est réalisée selon une technique RTM, injection-compression, pultrusion ou par infusion.

23. Composition réactive précurseur telle que définie dans l'une des revendications 1 à 17, **caractérisée en ce qu'**elle comprend lesdits composants prépolymère a) et allongeur b).

24. Utilisation d'une composition précurseur telle que définie dans l'une des revendications 1 à 17 (en absence de renfort fibreux) ou selon la revendication 23, pour l'imprégnation à l'état fondu d'un renfort fibreux, comme précurseur de la matrice polymère thermoplastique, pour la fabrication de pièces mécaniques ou de structure à base de matériau composite.

25. Utilisation selon la revendication 24, **caractérisée en ce que** lesdites pièces mécaniques ou de structure dudit matériau composite concernent des applications dans le domaine de l'automobile, ferroviaire, marin ou maritime, de l'éolien, photovoltaïque, solaire y compris panneaux solaires et composants de centrales solaires, du sport, aéronautique et spatial, transport routier concernant les camions, du bâtiment, génie civil, des panneaux de protection et des loisirs, l'électrique ou l'électronique.

26. Utilisation selon la revendication 25, **caractérisée en ce qu'**elle concerne des applications dans le domaine de l'éolien et **en ce que** la Tg dudit polyamide est d'au moins 80°C et de préférence d'au moins 90°C.

27. Utilisation selon la revendication 25, **caractérisée en ce qu'**elle concerne des applications dans le domaine de l'automobile et **en ce que** la Tg dudit polymère polyamide est d'au moins 100°C.

28. Utilisation selon la revendication 25, **caractérisée en ce qu'**elle concerne des applications dans le domaine de l'aéronautique et **en ce que** la Tg dudit polymère polyamide est d'au moins 120°C.

29. Pièce moulée, **caractérisée en ce qu'**elle résulte de l'utilisation d'au moins une composition de moulage telle que définie selon l'une des revendications 1 à 18 ou d'une composition précurseur selon la revendication 23.

30. Pièce selon la revendication 29, **caractérisée en ce qu'**il s'agit de pièce de matériau composite à base d'une composition telle que définie selon la revendication 18.

## Patentansprüche

1. Reaktive Formgusszusammensetzung, insbesondere für thermoplastischen Verbundwerkstoff, **dadurch gekennzeichnet, dass** sie eine reaktive Vorläuferzusammensetzung aus einem teilkristallinen thermoplastischen Polymer, das ein teilkristallines Polyamid ist, und optional mindestens eine Faserverstärkung, und in diesem Fall vorzugsweise auf langen Fasern basierend, umfasst, und dadurch, dass:
- die reaktive Vorläuferzusammensetzung des thermoplastischen Polyamidpolymers Folgendes umfasst:
a) mindestens ein thermoplastisches Polyamidpräpolymer, das n identische terminale reaktive X-Funktionen trägt, gewählt aus: -NH₂ oder -CO₂H, vorzugsweise -CO2H, wobei n 1 bis 3, vorzugsweise 1 bis 2, mehr bevorzugt 1 oder 2, insbesondere 2 ist und
b) mindestens einen Y-A'-Y-Kettenverlängerer, wobei A' eine Einfachbindung ist, die die zwei Y-Funktionen verbindet, oder ein Kohlenwasserstoff-Biradikal mit nichtpolymerer Struktur und 2 terminale reaktive Epoxid-Y-Funktionen tragend, reaktiv durch Polyaddition mit mindestens einer X-Funktion des Präpolymers a), wobei der Verlängerer b) vorzugsweise eine molare Masse von weniger als 500, mehr bevorzugt weniger als 400 aufweist,
und **dadurch, dass**
- das aus der Polyadditionsreaktion zwischen den Komponenten a) und b) der Vorläuferzusammensetzung hervorgehende teilkristalline Polyamidpolymer eine Glasübergangstemperatur Tg von mindestens 80 °C, vorzugsweise von mindestens 90 °C, und eine Schmelztemperatur Tf von weniger als oder gleich 280 °C aufweist,
und **dadurch, dass**
- das Polyamidpolymer und sein Präpolymer a) in ihrer Struktur verschiedene Amideinheiten A und B und optional Amideinheiten C und D umfassen, die wie folgt ausgewählt sind:
- A: ist eine überwiegende Amideinheit, die in einem Molverhältnis, das von 55 bis 95 %, vorzugsweise von 55 bis 85 %, mehr bevorzugt von 55 bis 80 % reicht, vorliegt, gewählt aus den x.T-Einheiten, wobei x ein lineares aliphatisches Diamin aus C₉ bis C₁₈, vorzugsweise C₉, C₁₀, C₁₁ und C₁₂ ist, und wobei T Terephthalsäure ist,
- B: ist eine von A verschiedene Amideinheit, wobei die Einheit B in einem Molverhältnis, das von 5 bis 45 %, vorzugsweise von 15 bis 45 %, mehr bevorzugt von 20 bis 45 % reicht, vorliegt, abhängig von der Tf des Polyamids auf Basis von Einheit A, und die Amideinheit B aus den Einheiten x'.T gewählt ist, wobei x' gewählt ist aus:
∘ B1) einem verzweigten aliphatischen Diamin, das eine einzige Methyl- oder Ethylverzweigung (oder -verästelung) trägt und eine Hauptkettenlänge, die sich um mindestens zwei Kohlenstoffatomen in Bezug auf die Hauptkettenlänge des x-Diamins der assoziierten Einheit A unterscheidet, wobei x' vorzugsweise 2-Methylpentamethylendiamin (MPMD) ist, oder
∘ B2) dem m-Xylylendiamin (MXD) oder
∘ B3) einem linearen aliphatischen Diamin aus C₄ bis C₁₈, wenn das x-Diamin in der Einheit A ein lineares aliphatisches Diamin aus C₁₁ bis C₁₈ ist, und x' ein Diamin aus C₉ bis C₁₈ ist, wenn das x-Diamin in der Einheit A ein Diamin aus C₉ oder C₁₀ ist,
und wobei B vorzugsweise aus x'.T gewählt ist, wobei x' das MPMD gemäß B1) oder das MXD gemäß B2) oder ein lineares aliphatisches Diamin wie vorstehend definiert gemäß B3) ist, und wobei x' mehr bevorzugt MPMD gemäß B1) oder MXD gemäß B2) und noch mehr bevorzugt MXD gemäß B2) ist,
- C: optionale von A und B verschiedene Amideinheit, gewählt aus Amideinheiten auf Basis einer cycloaliphatischen und/oder aromatischen Struktur oder auf Basis von x'T wie oben für B definiert, doch wobei sich x' von x' für die Einheit B unterscheidet,
- D: optionale von A, B und C verschiedene Amideinheit, wenn C vorhanden und gewählt ist aus den aliphatischen Amideinheiten, die hervorgehen aus:
▪ Aminosäuren oder Lactamen aus C₆ bis C₁₂, vorzugsweise aus C₆, C₁₁ und C₁₂ oder deren Mischungen
▪ der Reaktion einer linearen aliphatischen Disäure aus C₆ bis C₁₈, vorzugsweise aus C₆ bis C₁₂, und eines linearen aliphatischen Diamins aus C₆ bis C₁₈, vorzugsweise aus C₆ bis C₁₂ oder deren Mischungen
und unter der Voraussetzung, dass die Summe der Molverhältnisse von A + B + C + D 100 % beträgt.

2. Zusammensetzung nach Anspruch 1, **dadurch gekennzeichnet, dass** die Amideinheit C vorhanden ist und B teilweise in einem Molverhältnis, das in Bezug zu Einheit B bis zu 25 % reicht, ersetzt.

3. Zusammensetzung nach einem der Ansprüche 1 bis 2, **dadurch gekennzeichnet, dass** die Amideinheit D vorhanden ist und B teilweise in einem Molverhältnis, das in Bezug zu Einheit B bis zu 70 % reicht, ersetzt.

4. Zusammensetzung nach einem der Ansprüche 1 bis 3, **dadurch gekennzeichnet, dass** die Differenz Tf-Tc zwischen der Schmelztemperatur Tf und der Kristallisationstemperatur Tc des teilkristallinen thermoplastischen Polymers 50 °C nicht überschreitet, vorzugsweise 40 °C nicht überschreitet und insbesondere 30 °C nicht überschreitet.

5. Zusammensetzung nach einem der Ansprüche 1 bis 4, **dadurch gekennzeichnet, dass** die Kristallisationsenthalpie des Matrixpolymers, gemessen in durch Differentialscanningkalorimetrie (DSC) nach der ISO-Norm 11357-3, größer als 40 J/g, vorzugsweise größer als 45 J/g ist.

6. Zusammensetzung nach einem der Ansprüche 1 bis 5, **dadurch gekennzeichnet, dass** die Amideinheit A in einem Molverhältnis, das in Bezug zur Gesamtheit der Einheiten des Polymers von 55 bis 80 %, vorzugsweise von 55 bis 75 %, mehr bevorzugt von 55 bis 70 % reicht, vorliegt.

7. Zusammensetzung nach einem der Ansprüche 1 bis 6, **dadurch gekennzeichnet, dass** die Einheit B x'T entspricht, wobei x' gemäß der Option B1) gewählt ist, wobei das Diamin x' insbesondere MPMD ist.

8. Zusammensetzung nach einem der Ansprüche 1 bis 6, **dadurch gekennzeichnet, dass** die Einheit B x'T entspricht, wobei x' gemäß der Option B2) gewählt ist, wobei x' das MXD ist.

9. Zusammensetzung nach einem der Ansprüche 1 bis 6, **dadurch gekennzeichnet, dass** die Einheit B x'T entspricht, wobei x' ein lineares aliphatisches Diamin ist, wie gemäß der Option B3) definiert.

10. Zusammensetzung nach einem der Ansprüche 1 bis 6, **dadurch gekennzeichnet, dass** die Einheiten A und B wie folgt ausgewählt sind:
- wenn die Einheit A 9T ist, wird die Einheit B ausgewählt aus: 10T, 11T, 12T, 13T, 14T, 15T, 16T, 17T und 18T, MPMD.T und MXD.T, vorzugsweise 11T, 12T, 13T, 14T, 15T, 16T, 17T und 18T, MPMD.T und MXD.T, mehr bevorzugt MPMD.T oder MXD.T, mit einem Molverhältnis von B, das von 30 bis 45 % reicht
- wenn die Einheit A 10T ist, wird die Einheit B ausgewählt aus: 9T, 11T, 12T, 13T, 14T, 15T, 16T, 17T und 18T, MPMD.T und MXD.T, vorzugsweise 12T, 13T, 14T, 15T, 16T, 17T und 18T, MPMD.T und MXD.T, mehr bevorzugt MPMD.T oder MXD.T, mit einem Molverhältnis von B, das von 25 bis 45 % reicht
- wenn die Einheit A 11T ist, wird die Einheit B ausgewählt aus: 9T, 10T, 12T, 13T, 14T, 15T, 16T, 17T und 18T, MPMD.T und MXD.T, vorzugsweise 9T, 13T, 15T, 16T, 17T und 18T, MPMD.T und MXD.T, mehr bevorzugt MPMD.T oder MXD.T, mit einem Molverhältnis von B, das von 20 bis 45 % reicht
- wenn die Einheit A 12T ist, wird die Einheit B ausgewählt aus: 9T, 10T, 11T, 13T, 14T, 15T, 16T, 17T und 18T, MPMD.T und MXD.T, vorzugsweise 9T, 10T, 14T, 15T, 16T, 17T und 18T, MPMD.T und MXD.T, mehr bevorzugt MPMD.T oder MXD.T, mit einem Molverhältnis von B, das von 20 bis 45 % reicht.

11. Zusammensetzung nach Anspruch 10, **dadurch gekennzeichnet, dass** die Einheit A eine 9T-Einheit ist und die Einheit B ausgewählt ist aus: 10T, 11T, 12T, 13T, 14T, 15T, 16T, 17T und 18T, MPMD.T und MXD.T, vorzugsweise 11T, 12T, 13T, 14T, 15T, 16T, 17T und 18T, MPMD.T und MXD.T, mehr bevorzugt MPMD.T oder MXD.T, mit einem Molverhältnis von B, das von 30 bis 45 % reicht.

12. Zusammensetzung nach Anspruch 10, **dadurch gekennzeichnet, dass** die Einheit A eine 10T-Einheit ist und die Einheit B ausgewählt ist aus: 9T, 11T, 12T, 13T, 14T, 15T, 16T, 17T und 18T, MPMD.T und MXD.T, vorzugsweise 12T, 13T, 14T, 15T, 16T, 17T und 18T, MPMD.T, mehr bevorzugt MPMD.T oder MXD.T und MXD.T mit einem Molverhältnis von B, das von 25 bis 45 % reicht.

13. Zusammensetzung nach Anspruch 10, **dadurch gekennzeichnet, dass** die Einheit A eine 11T-Einheit ist und die Einheit B ausgewählt ist aus: 9T, 10T, 12T, 13T, 14T, 15T, 16T, 17T und 18T, MPMD.T und MXD.T, vorzugsweise 9T, 13T, 15T, 16T, 17T und 18T, MPMD.T und MXD.T, mehr bevorzugt MPMD.T oder MXD.T, mit einem Molverhältnis von B, das von 20 bis 45 % reicht.

14. Zusammensetzung nach Anspruch 10, **dadurch gekennzeichnet, dass** die Einheit A eine 12T-Einheit ist und die Einheit B ausgewählt ist aus: 9T, 10T, 11T, 13T, 14T, 15T, 16T, 17T und 18T, MPMD.T und MXD.T, vorzugsweise 9T, 10T, 14T, 15T, 16T, 17T und 18T, MPMD.T und MXD.T, mehr bevorzugt MPMD.T oder MXD.T, mit einem Molverhältnis von B, das von 20 bis 45 % reicht.

15. Zusammensetzung nach einem der Ansprüche 7 bis 14, **dadurch gekennzeichnet, dass** die Einheit C und/oder D, wie nach einem der Ansprüche 1 bis 3 definiert, bezogen auf das Molverhältnis der Einheit B die Einheit B mit einem Molverhältnis von bis zu 70 %, vorzugsweise weniger als 40 %, teilweise ersetzt.

16. Zusammensetzung nach einem der Ansprüche 1 bis 15, **dadurch gekennzeichnet, dass** die reaktiven Präpolymere a) eine zahlenmittlere molare Masse Mn im Bereich von 500 bis 10000, vorzugsweise von 1000 bis 6000, aufweisen.

17. Zusammensetzung nach einem der Ansprüche 1 bis 16, **dadurch gekennzeichnet, dass** der Verlängerer ein gegebenenfalls substituiertes aliphatisches, cycloaliphatisches oder aromatisches Diepoxid ist.

18. Zusammensetzung nach einem der Ansprüche 1 bis 17, **dadurch gekennzeichnet, dass** sie mindestens eine Faserverstärkung umfasst, vorzugsweise mit langen Fasern, insbesondere mit kreisförmigem Querschnitt mit L/D > 1000, vorzugsweise > 2000 und insbesondere ausgewählt aus Glas-, Kohlenstoff-, Keramik-, Aramidfasern oder deren Mischungen.

19. Verfahren zur Herstellung eines thermoplastischen Verbundwerkstoffs, insbesondere eines mechanischen Teils oder eines Strukturteils, basierend auf mindestens einer Zusammensetzung, wie nach einem der Ansprüche 1 bis 18 definiert, **dadurch gekennzeichnet, dass** es einen Schritt der Schmelzimprägnierung von mindestens einer Faserverstärkung mit einer reaktiven Vorläuferzusammensetzung, wie nach einem der Ansprüche 1 bis 17 definiert, in einer offenen oder geschlossenen Form oder außerhalb der Form umfasst.

20. Verfahren nach Anspruch 19, **dadurch gekennzeichnet, dass** es die folgenden Schritte umfasst:
i) Schmelzimprägnierung einer Faserverstärkung mit einer reaktiven Vorläuferzusammensetzung, wie nach einem der Ansprüche 1 bis 17 definiert, in einer offenen oder geschlossenen Form oder außerhalb der Form, um eine Formgusszusammensetzung mit Faserverstärkung, wie nach einem der Ansprüche 1 bis 18 definiert, zu erhalten,
ii) Erwärmen der Zusammensetzung aus Schritt i) mit einer Polymerisationsreaktion durch Massenpolyaddition in geschmolzenem Zustand zwischen den Komponenten a) und b) der reaktiven Vorläuferzusammensetzung unter Kettenverlängerung,
iii) Implementieren durch Formgießen oder durch ein anderes Implementierungssystem und gleichzeitig mit dem Polymerisationsschritt ii).

21. Verfahren nach Anspruch 20, **dadurch gekennzeichnet, dass** es gleichzeitig oder verzögert einen Implementierungsschritt umfasst, der das Formgießen und Formen der in Schritt i) imprägnierten Faserverstärkung umfasst, um das endgültige Verbundteil in einer Form zu erzeugen.

22. Verfahren nach Anspruch 21, **dadurch gekennzeichnet, dass** die Implementierung gemäß einer RTM-Technik, Injektionskompression, Pultrusion oder durch Infusion durchgeführt wird.

23. Reaktive Vorläuferzusammensetzung wie nach einem der Ansprüche 1 bis 17 definiert, **dadurch gekennzeichnet, dass** sie die Präpolymerkomponenten a) und den Verlängerer b) umfasst.

24. Verwendung einer Vorläuferzusammensetzung wie nach einem der Ansprüche 1 bis 17 definiert (bei Abwesenheit von Faserverstärkung) oder nach Anspruch 23, zur Schmelzimprägnierung einer Faserverstärkung als Vorläufer der thermoplastischen Polymermatrix zur Herstellung von mechanischen Teilen oder Strukturteilen auf Verbundmaterialbasis.

25. Verwendung nach Anspruch 24, **dadurch gekennzeichnet, dass** die mechanischen Teile oder Strukturteile des Verbundmaterials Anwendungen im Automobil-, Eisenbahn-, See- oder Schifffahrts-, Wind-, Photovoltaik- und Solar-, einschließlich Sonnenkollektoren und Komponenten von Solarkraftwerken, Sport-, Luft- und Raumfahrt-, Straßentransport- betreffend Lastkraftwagen, Bauwesen-, Tiefbau-, Schutzplatten- und Freizeitaktivitäts-, Elektrik- oder Elektronikbereich betreffen.

26. Verwendung nach Anspruch 25, **dadurch gekennzeichnet, dass** sie Anwendungen im Windenergiebereich betrifft und dass die Tg des Polyamids mindestens 80 °C und vorzugsweise mindestens 90 °C beträgt.

27. Verwendung nach Anspruch 25, **dadurch gekennzeichnet, dass** sie Anwendungen im Automobilbereich betrifft und dass die Tg des Polyamidpolymers mindestens 100 °C beträgt.

28. Verwendung nach Anspruch 25, **dadurch gekennzeichnet, dass** sie Anwendungen im Luftfahrtsbereich betrifft und dass die Tg des Polyamidpolymers mindestens 120 °C beträgt.

29. Formteil, **dadurch gekennzeichnet, dass** es aus der Verwendung von mindestens einer Formgusszusammensetzung wie definiert nach einem der Ansprüche 1 bis 18 oder einer Vorläuferzusammensetzung nach Anspruch 23 resultiert.

30. Teil nach Anspruch 29, **dadurch gekennzeichnet, dass** es sich um ein Verbundmaterialteil handelt, das auf einer Zusammensetzung wie definiert nach Anspruch 18 basiert.

## Claims

1. A reactive molding composition in particular for a thermoplastic composite material, **characterized in that** it comprises a reactive precursor composition of a semi-crystalline thermoplastic polymer that is a semi-crystalline polyamide and optionally at least one fibrous reinforcement and in this case preferably containing long fibers and **in that**:
- said reactive precursor composition of said thermoplastic polyamide polymer comprises:
a) at least one thermoplastic polyamide prepolymer, bearing n identical reactive terminal functions X, chosen from: -NH₂ or -CO₂H, preferably -CO₂H, with n being from 1 to 3, preferably from 1 to 2, more preferably 1 or 2, more particularly 2 and
b) at least one chain extender Y-A'-Y, with A' being a single bond connecting the 2 Y functions or a hydrocarbon biradical with non-polymeric structure and bearing 2 terminal reactive epoxy functions Y, reactive by polyaddition with at least one function X of said prepolymer a), preferably said extender b) having a molecular mass less than 500, more preferably less than 400,
and **in that**
- said semi-crystalline polyamide polymer from the polyaddition reaction between said components a) and b) of said precursor composition has a glass transition temperature Tg of at least 80 °C, preferably of at least 90 °C and a melting point Tf less than or equal to 280 °C,
and **in that**
- said polyamide polymer and its prepolymer a) comprise in their structure amide motifs A and B that are different and optionally amide motifs C and D, selected as follows:
- A: is a main amide motif present in a molar content ranging from 55 to 95 %, preferably from 55 to 85 %, more preferably from 55 to 80 %, chosen from motifs x.T, where x is a linear C₉ to C₁₈, preferably C₉, C₁₀, C₁₁ and C₁₂ aliphatic diamine and where T is terephthalic acid,
- B: is an amide motif different from A, where motif B is present in a molar content ranging from 5 to 45 %, preferably from 15 to 45 %, more preferably from 20 to 45 %, as a function of the Tf of the polyamide containing motif A and said motif amide B is chosen from motifs x'.T where x' is chosen from:
∘ B1) a branched aliphatic diamine bearing a single methyl or ethyl branch and having a main chain length different by at least two carbon atoms relative to the main chain length of the diamine x of said associated motif A, preferably x' being 2-methyl pentamethylene diamine (MPMD) or
∘ B2) m-xylylene diamine (MXD) or
∘ B3) a linear C₄ to C₁₈ aliphatic diamine when in motif A, said diamine x is a linear C₁₁ to C₁₈ aliphatic diamine and x' is a C₉ to C₁₈ diamine when in motif A, said diamine x is a C₉ or C₁₀ diamine,
and preferably B being chosen from x'.T, where x' is MPMD according to B1) or MXD according to B2) or a linear aliphatic diamine as defined above according to B3) and more preferably x' is MPMD according to B1) or MXD according to B2) and even more preferably MXD according to B2),
- C: optional amide motif different from A and B, chosen from amide motifs based on a cycloaliphatic and/or aromatic structure or based on x'T as defined above for B but with x' different from x' for motif B,
- D: optional amide motif different from A, B, and C when C is present, and chosen from aliphatic amide motifs derived from:
▪ C₆ to C₁₂, preferably C₆, C₁₁ and C₁₂ amino acids or lactams, or mixtures thereof
▪ the reaction of a linear C₆ to C₁₈, preferably C₆ to C₁₂ aliphatic diacid and a linear C₆ to C₁₈, preferably C₆ to C₁₂ aliphatic diamine, or mixtures thereof and under the condition that the sum of the molar contents of A + B + C + D is equal to 100 %.

2. The composition according to claim 1, **characterized in that** said amide motif C is present and as a partial replacement for B at a molar content ranging up to 25 % relative to said motif B.

3. The composition according to one of claims 1 to 2, **characterized in that** said motif D is present and as a partial replacement for B at a molar content ranging up to 70 % relative to said motif B.

4. The composition according to one of claims 1 to 3, **characterized in that** the difference Tf-Tc between the melting point Tf and the crystallization temperature Tc of said semi-crystalline thermoplastic polymer does not exceed 50 °C, preferably does not exceed 40 °C and more particularly does not exceed 30 °C.

5. The composition according to one of claims 1 to 4, **characterized in that** the enthalpy of crystallization of said matrix polymer, measured by differential scanning calorimetry (DSC) according to standard ISO 11357-3, is greater than 40 J/g, preferably greater than 45 J/g.

6. The composition according to one of claims 1 to 5, **characterized in that** said amide motif A is present with a molar content ranging from 55 to 80 %, preferably from 55 to 75 %, more preferably from 55 to 70 % relative to all of the motifs of said polymer.

7. The composition according to one of claims 1 to 6, **characterized in that** said motif B corresponds to x'T with x' chosen according to option B1) in particular with the diamine x' being MPMD.

8. The composition according to one of claims 1 to 6, **characterized in that** said motif B corresponds to x'T with x' chosen according to option B2), x' being MXD.

9. The composition according to one of claims 1 to 6, **characterized in that** said motif B corresponds to x'T with x' being a linear aliphatic diamine as defined according to option B3).

10. The composition according to one of claims 1 to 6, **characterized in that** motifs A and B are selected as follows:
- for motif A being 9T, said motif B is selected from: 10T, 11T, 12T, 13T, 14T, 15T, 16T, 17T and 18T, MPMD.T and MXD.T, preferably 11T, 12T, 13T, 14T, 15T, 16T, 17T and 18T, MPMD.T and MXD.T, more preferably MPMD.T or MXD.T, with a molar content of B ranging from 30 to 45 %
- for motif A being 10T, said motif B is selected from: 9T, 11T, 12T, 13T, 14T, 15T, 16T, 17T and 18T, MPMD.T and MXD.T, preferably 12T, 13T, 14T, 15T, 16T, 17T and 18T, MPMD.T and MXD.T, more preferably MPMD.T or MXD.T, with a molar content of B ranging from 25 to 45 %
- for motif A being 11T, said motif B is selected from: 9T, 10T, 12T, 13T, 14T, 15T, 16T, 17T and 18T, MPMD.T and MXD.T, preferably 9T, 13T, 15T, 16T, 17T and 18T, MPMD.T and MXD.T, more preferably MPMD.T or MXD.T, with a molar content of B ranging from 20 to 45 %
- for motif A being 12T, said motif B is selected from: 9T, 10T, 11T, 13T, 14T, 15T, 16T, 17T and 18T, MPMD.T and MXD.T, preferably 9T, 10T, 14T, 15T, 16T, 17T and 18T, MPMD.T and MXD.T, more preferably MPMD.T or MXD.T, with a molar content of B ranging from 20 to 45 %.

11. The composition according to claim 10, **characterized in that** motif A is a motif 9T and motif B is selected from: 10T, 11T, 12T, 13T, 14T, 15T, 16T, 17T and 18T, MPMD.T and MXD.T, preferably 11T, 12T, 13T, 14T, 15T, 16T, 17T and 18T, MPMD.T and MXD.T, more preferably MPMD.T or MXD.T, with a molar content of B ranging from 30 to 45 %.

12. The composition according to claim 10, **characterized in that** motif A is a motif 10T and motif B is selected from: 9T, 11T, 12T, 13T, 14T, 15T, 16T, 17T and 18T, MPMD.T and MXD.T, preferably 12T, 13T, 14T, 15T, 16T, 17T and 18T, MPMD.T, more preferably MPMD.T or MXD.T and MXD.T with a molar content of B ranging from 25 to 45 %.

13. The composition according to claim 10, **characterized in that** motif A is a motif 11T and motif B is selected from: 9T, 10T, 12T, 13T, 14T, 15T, 16T, 17T and 18T, MPMD.T and MXD.T, preferably 9T, 13T, 15T, 16T, 17T and 18T, MPMD.T and MXD.T, more preferably MPMD.T or MXD.T, with a molar content of B ranging from 20 to 45 %.

14. The composition according to claim 10, **characterized in that** motif A is a motif 12T and motif B is selected from: 9T, 10T, 11T, 13T, 14T, 15T, 16T, 17T and 18T, MPMD.T and MXD.T, preferably 9T, 10T, 14T, 15T, 16T, 17T and 18T, MPMD.T and MXD.T, more preferably MPMD.T or MXD.T, with a molar content of B ranging from 20 to 45 %.

15. The composition according to one of claims 7 to 14, **characterized in that** the motif C and/or D as defined according to one of claims 1 to 3 partially replaces motif B with a molar content up to 70 %, preferably less than 40 % relative to the molar content of said motif B.

16. The composition according to one of claims 1 to 15, **characterized in that** said reactive prepolymers a) have a number average molecular weight Mn ranging from 500 to 10,000, preferably from 1000 to 6000.

17. The composition according to one of claims 1 to 16, **characterized in that** said extender is an optionally substituted aliphatic, cycloaliphatic or aromatic, diepoxide.

18. The composition according to one of claims 1 to 17, **characterized in that** it comprises at least one fibrous reinforcement preferably with long fibers, in particular with a circular cross-section with L/D > 1000, preferably > 2000 and more particularly selected from fibers of glass, carbon, ceramic, aramid or mixtures thereof.

19. A method of manufacturing a thermoplastic composite material, in particular of a mechanical part or a structural part containing at least one composition as defined according to one of claims 1 to 18, **characterized in that** it comprises a step of melt impregnation of at least one fibrous reinforcement by a reactive precursor composition as defined according to one of claims 1 to 17, in an open or closed mold or outside a mold.

20. The method according to claim 19, **characterized in that** it comprises the following steps:
i) melt impregnation of a fibrous reinforcement by a reactive precursor composition as defined in one of claims 1 to 17, in an open or closed mold or outside a mold, to produce a molding composition with fibrous reinforcement as defined according to one of claims 1 to 18,
ii) heating of the composition from step i) with a polymerization reaction by bulk melt polyaddition, between components a) and b) of said reactive precursor composition, with chain lengthening,
iii) implementation by molding or by another implementation system and simultaneously with polymerization step ii).

21. The method according to claim 20, **characterized in that** it comprises simultaneously or later a step of implementation comprising the molding and shaping of said impregnated fibrous reinforcement from step i) to form the final composite part in a mold.

22. The method according to claim 21 **characterized in that** said implementation is achieved according to a technique of RTM, injection-compression, pultrusion or by infusion.

23. The reactive precursor composition as defined in one of claims 1 to 17, **characterized in that** it comprises said prepolymer a) and extender b) components.

24. The use of a precursor composition as defined in one of claims 1 to 17 (in the absence of fibrous reinforcement) or according to claim 23, for the melt impregnation of a fibrous reinforcement, as a precursor of the thermoplastic polymer matrix, to make mechanical or structural parts containing composite material.

25. The use according to claim 24, **characterized in that** said mechanical or structural parts of said composite material relate to applications in the domain of automotive, rail, marine or maritime, wind power, photovoltaic, solar including solar panels and components for solar plants, sports, aeronautics and space, road transport relating to trucks, construction, civil engineering, signs for protection and leisure, electrical or electronics.

26. The use according to claim 25, **characterized in that** it relates to applications in the domain of wind power and **in that** the Tg of said polyamide is at least 80 °C and preferably at least 90 °C.

27. The use according to claim 25, **characterized in that** it relates to applications in the domain of automotive and **in that** the Tg of said polyamide polymer is at least 100 °C.

28. The use according to claim 25, **characterized in that** it relates to applications in the domain of aeronautics and **in that** the Tg of said polyamide polymer is at least 120 °C.

29. A molded part, **characterized in that** it results from the use of at least one molding composition as defined according to one of claims 1 to 18 or to a precursor composition according to claim 23.

30. The part according to claim 29, **characterized in that** it is a part of a composite material containing a composition as defined according to claim 18.
